# EUROPEAN PATENT APPLICATION

(11) **EP 3 340 044 A1**
(43) Date of publication of application: **27.06.2018**
(21) Application number: 16306780.4
(22) Date of filing: 22.12.2016
(51) Int. Cl.: G06F 9/44

(54) **METHOD AND APPARATUS FOR PROCESSING SOFTWARE CODE**

(71) Applicant: Ecole Nationale de l'Aviation Civile, 31400 Toulouse Cedex (FR)
(72) Inventor: CONVERSY, Stéphane, 31400 TOULOUSE (FR)
(74) Representative: Bell, Mark

(57) **Abstract**

A mechanism for interacting with software code based on translation into a finite state machine is presented. The states of the translated code currently under review are presented, along with other related states. Related states may be states that feed into the states of the translated code currently under review, or that may follow those states in the process flow. User edits may be made to related states as they are presented in connection with states of the translated code currently under review, and the corresponding code updated accordingly. The states of the translated code currently under review, and the corresponding related states may be updated dynamically to reflect actual code execution.

## Description

### Field of the invention

The present invention relates to software code processing, and in particular review and editing of software code.

### Background of the invention

The tools and methodologies associated with software code editing have evolved over time in parallel with the evolution of the computer systems used to run the resulting code. While in the era of punch cards, programs were developed on paper, with the availability of terminals it became feasible to develop software directly in the computing environment. Since then, programming has largely revolved around editing text based code, in general purpose text editing software, or increasingly over time in a dedicated Integrated Development Environment, generally offering additional tools for compiling and debugging the code. Certain environments support visual coding, in which a user may edit code by the manipulation of graphical representations of code entities in some computer generated space. Both text based and visual programming environments tend to present code with a structure built around a number of modules, with the elements in each module being presented in the sequence in which they will be executed subject to any loops and forks within the module.

It is desirable to provide improved tools for reviewing software code, in particular facilitating the tracking of execution through the code.

### Summary of the invention

In accordance with the present invention in a first aspect there is provided an apparatus for processing software code, the apparatus comprising a code converter adapted to prepare a representation of the code as a finite state machine;
a primary state selector adapted to select one or more states of the finite state machine for display,
a secondary state selector adapted to identify secondary states for the selected primary states, where
all the secondary states are states of the finite state machine comprising transitions that lead to the selected states, or
all the secondary states are states of the finite state machine comprising transitions that lead out of the selected states, or
the states belong to a valid sequence through a series of selected states of the finite state machine specified in user input received by the apparatus; and
a representation processor adapted to cause the presentation of a textual representation integrating a textual representation of the selected states with a textual representation of the secondary states.

In a development of the first aspect, the apparatus may be further adapted to receive a user input specifying whether the secondary states should comprise all states of the finite state machine comprising transitions that lead to the selected states, or otherwise all states of the finite state machine comprising transitions that lead out of the selected states; and to refresh the textual representation accordingly.
In a development of the first aspect, the apparatus may be further adapted to receiving a user input specifying which state of the finite state machine is to constitute the selected states.

In a development of the first aspect, the apparatus may be further adapted to receive a user input specifying an amendment to a part of the textual representation,
to Identify the amended state corresponding to the amendment,
to identify the amended code corresponding to the amended state, and
to update the amended code to reflect the amendment.

In a development of the first aspect, the apparatus may be further adapted to select one or more secondary states as expanded secondary states, whereby further states of the finite state machine are selected for display as secondary states in the case where they are states of the finite state machine comprising transitions that lead to the expanded secondary states, or are states of the finite state machine comprising transitions that lead out of the expanded secondary states.

In a development of the first aspect, the apparatus may be further adapted to select one or more states of the finite state machine for display where the selected states lie within a current flow of execution.

In accordance with the present invention in a second aspect there is provided a method of processing software code, the method comprising the steps of:
preparing a representation of the code as a finite state machine;
selecting one or more states of the finite state machine for display;
for each of the selected states, identifying secondary states, where
   all the secondary states are states of the finite state machine comprising transitions that lead to the selected states, or
   all the secondary states are states of the finite state machine comprising transitions that lead out of the selected states,
   or receiving user input specifying a valid sequence through a series of selected states of the finite state machine; and
presenting a textual representation integrating a textual representation of the selected states with a textual representation of the secondary states.

In a development of the second aspect, the method may comprise the additional steps of receiving a user input specifying whether the secondary states should comprise all states of the finite state machine comprising transitions that lead to the selected states, or otherwise all states of the finite state machine comprising transitions that lead out of the selected states; and refreshing the textual representation accordingly.

In a development of the second aspect, the method may comprise the additional step of receiving a user input specifying which state of the finite state machine is to constitute the selected states.

In a development of the second aspect, the method may comprise the additional steps of receiving a user input specifying an amendment to a part of the textual representation,
Identifying the amended state corresponding to the amendment,
Identifying the amended code corresponding to the amended state, and
updating the amended code to reflect the amendment.

In a development of the second aspect, the method may comprise the additional steps of selecting one or more secondary states as expanded secondary states, whereby further states of the finite state machine are selected for display as secondary states in the case where they are states of the finite state machine comprising transitions that lead to the expanded secondary states, or are states of the finite state machine comprising transitions that lead out of the expanded secondary states.

In a development of the second aspect, the step of selecting one or more states of the finite state machine for display may comprise selecting states that lie within a current flow of execution.

In accordance with the present invention in a third aspect there is provided a computer program adapted to implement the steps of the second aspect.

In accordance with the present invention in a fourth aspect there is provided a computer readable medium incorporating the computer program of the third aspect.

### Brief Description of the Drawings

The above and other advantages of the present invention will now be described with reference to the accompanying drawings, for illustration purposes only, in which:
- Figure 1: shows an example of a Finite State Machine;
- Figure 2: shows a method of processing software code, in accordance with an embodiment;
- Figure 3: shows a representation of a software development environment in accordance with an embodiment;
- Figure 4: shows a representation of a software development environment in accordance with an embodiment;
- Figure 5: shows an apparatus in accordance with an embodiment; and
- Figure 6: shows a generic computing system suitable for implementation of embodiments of the invention.

### Detailed description

Generally speaking, interactive computer software can be represented in terms of a Finite State Machine. A Finite State Machine is a representation of a process in terms of a machine having a number of defined states, whereby at any time the machine must be in one, and only one of these states, and where states are linked by defined transitions, whereby movement between states can only occur in accordance with one of these defined transitions. Any such Finite State Machine may be implemented in software and/or hardware.

The design of current programming tools is based on an implicit choice that consists in displaying code in a single, canonical representation. The textual canonical representation of interactive code consists of displaying the leaving transitions in the context of a state. However, in order to understand the behavior of a sequence of events, it is sometimes necessary to look at the code of the transitions that led to the particular state currently investigated. This requires the programmer to find the transitions by scanning all the code, and once found, hop from transition to transition to understand the sequence of instructions.
A difficulty arises in reading and debugging code prepared using prior art interfaces since for a reader viewing the current line of code under execution, there is no indication what preceding steps led execution to arrive at that point. The flow of execution through a piece of software can be modified by subtle factors which are not always obvious or easy to predict, and mean that this determination may often call for a complete understanding of the code structure of the code itself. In substantial software projects, this level of understanding is often unrealistic for human operators.

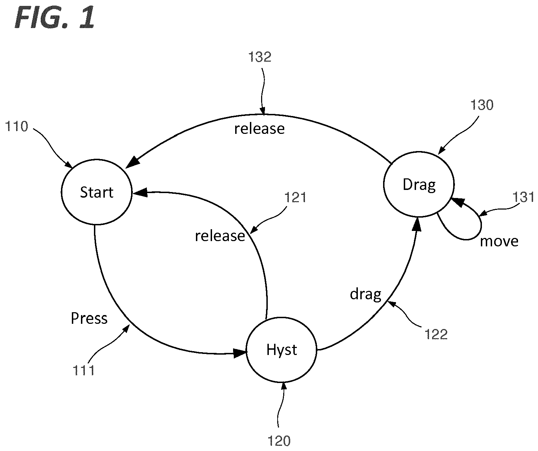

Figure 1 shows an example of a Finite State Machine.
As shown in figure 1, there is provided a Finite State Machine representing a user interface interaction feature. The States "Start" 110, "Hyst" 120 and "Drag" 130 are defined. The "Start" state has a transition "Press" 111, which leads to the state "Hyst" 120. The state "Hyst" 120 has a transition "Release" 121, which leads back to the state "Start" 110, and a transition "drag" 122, which leads to the state "drag" 130. The State "drag" 130 has a transition "move" 131, which loops back on the state "drag" 130, and a transition "release" 132, which leads back to the state "Start" 110. Accordingly, this state machine represents the common "drag and drop" behaviour frequently associated with Icons and other entities in graphical user interfaces. Specifically, when the user uses a cursor device such as a mouse pointer to click on such an entity, for example by moving the pointer over the entity and depressing the left mouse button, the press transition occurs for that entity bringing its state to Hyst. If the user then releases the mouse button, the transition "release" occurs and the state of the object returns to Start. If on the other hand the user moves the mouse by a given distance without releasing, the drag transition occurs shifting the entity's state to Drag. Further movement leaves the entities state at drag, until the user releases the mouse button, triggering the release event and returning the state to Start.

Although most programming languages do not directly define Finite State Machines, it is possible to convert any computer program into a Finite State Machine, either in software or hardware form.

Although traditionally Finite State Machines are represented by means of drawings such as described above with respect to figure 1, certain text based conventions do exist for the definition of Finite State Machines. In particular, SwingStates as presented in the article by Caroline Appert and Michel Beaudouin-Lafon. 2006. Entitled " SwingStates: adding state machines to the swing toolkit" in Proceedings of the 19th annual ACM symposium on User interface software and technology (UIST '06). ACM, New York, NY, USA, 319-322, proposes a set of rules for defining Finite State Machines in Java, using a class to represent each State Machine, and Anonymous classes. Each State is an Object belonging to a respective Anonymous Class, itself belonging to the State Class stored in a field of the State Machine, and each transition for a particular state is an object belonging to a respective Anonymous Class, itself belonging to the Transition Class stored in a field of the corresponding state. Swingstates or any other textual representation of Finite State Machines may be used in embodiments of the present invention.

The following text is a representation of the Finite State Machine of figure 1 in accordance with the SwingStates formalism:

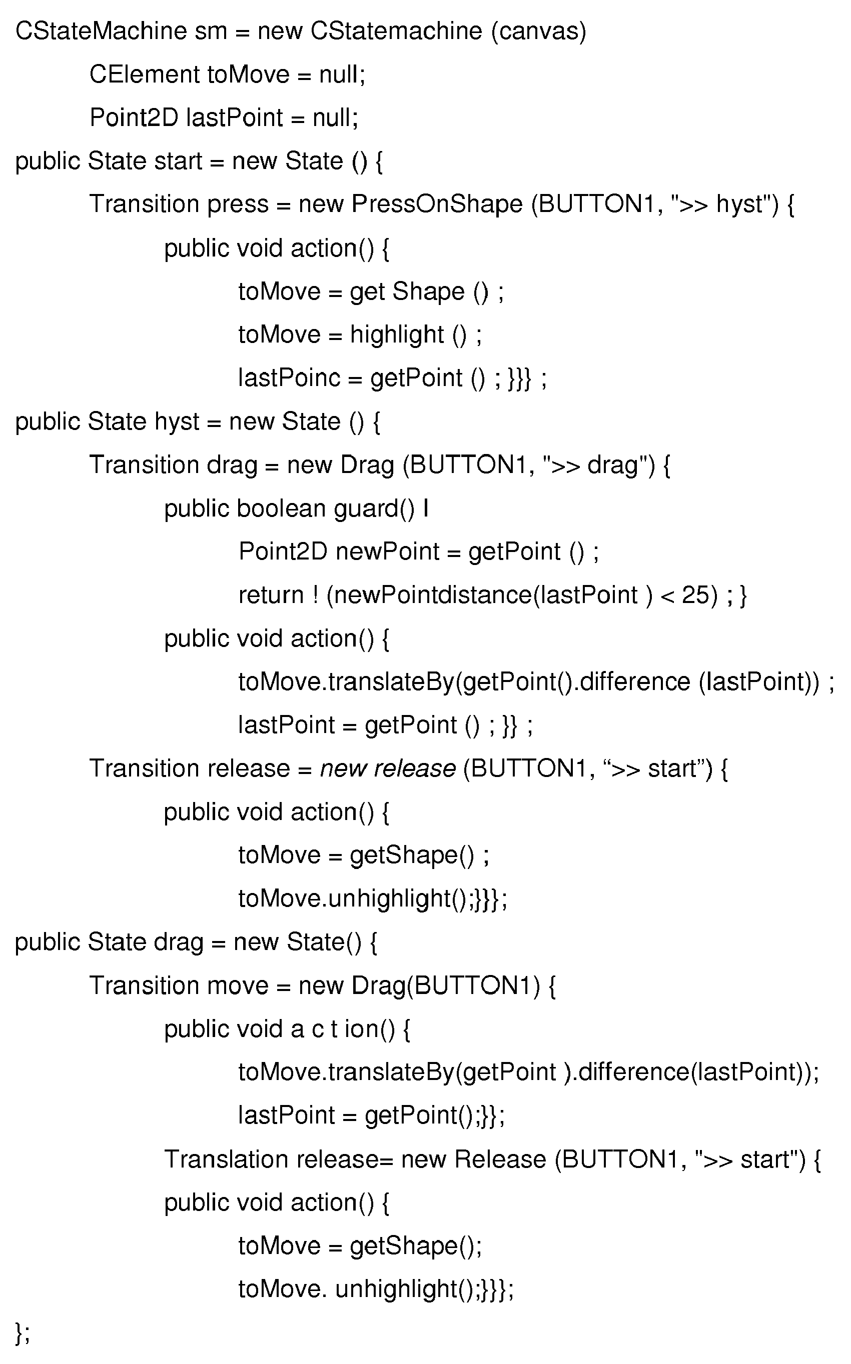

Accordingly, this code defines a drag and drop interaction. The programmer might want to fix a bug that occurs when a user of that program performs a particular sequence of events: the shape that was dragged is supposed to be highlighted during the drag. Since the "start" state is also the final state of the interaction (at the end of the interaction and whatever the end is, the interaction should start over), the shape being manipulated should be unhighlighted. With a traditional editor, this requires finding all transitions coming to the "start" state, and browsing through them. Furthermore, the fact that related pieces of code are spread apart implies that the programmer has to use his memory to compare them. The cognitive activity required to navigate into the code is thus not allocated to the more important cognition activity required to understand and design the code.

It will be appreciated with regard to the issue highlighted above that a formulation in terms of a Finite State Machine has the benefit of rendering explicit the possible paths for arriving at a particular point in the code.

This property may be used to facilitate software development, coding, debugging and the like.

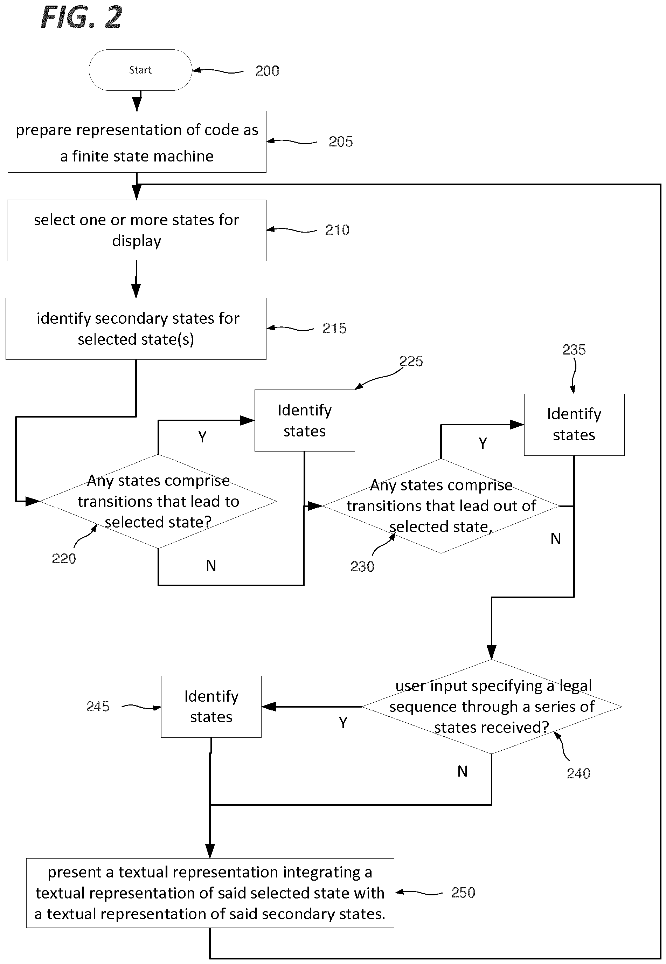

Figure 2 shows a method of processing software code, in accordance with an embodiment.

As shown, the method starts at step 200 before proceeding to step 205 at which a representation of the code to be processed as a finite state machine is prepared. This may be on the basis of a graphical representation or a text based or other encoded representation. The representation may be prepared by conversion of conventional software code, for example as implemented by the SwingStates library or may exist in a natively Finite State Machine representation.

The method next proceeds to step 210 at which one or more states of the finite state machine representation are selected for display. For grammatical reasons the following description will often refer to "selected states" in this regard, however it should be borne in mind that any embodiment may apply to only a single selected state.

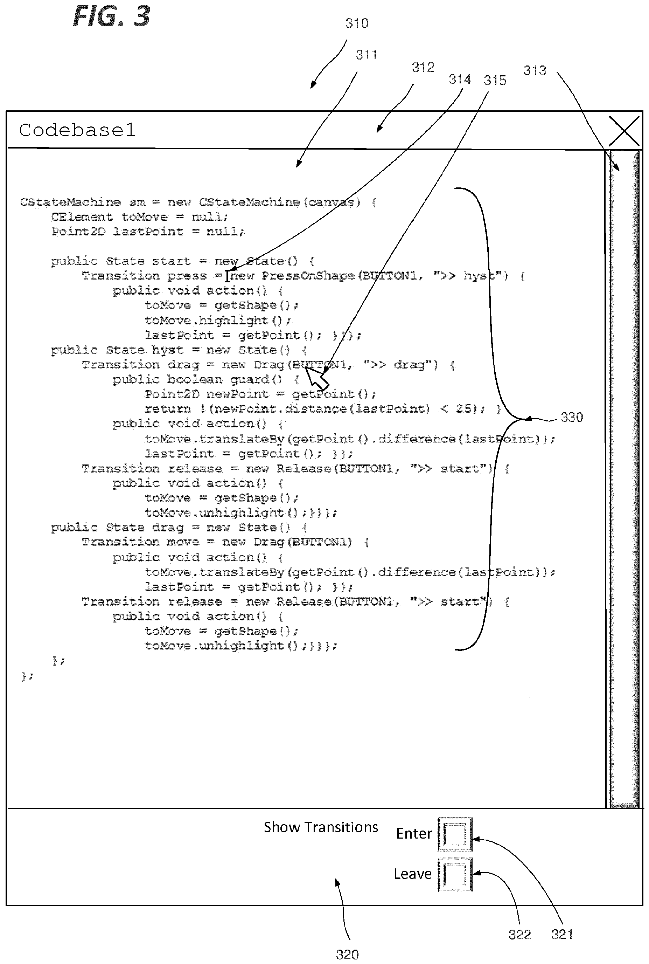

Figure 3 shows a representation of a software development environment in accordance with an embodiment. As shown in figure 3, there is provided a window 310 in a graphical user interface, which may constitute part of an Integrated Development Environment. As shown the window 310 comprises an editing pane 311, title bar 312, slider bar 313, cursor 314 and pointer 315 as examples of typical GUI interface features. The editing pane 311 displays a text representation of a Finite State Machine 330 as discussed above, and as shown the text in question is identical to that presented above. The window additionally comprises an option pane 320 presenting checkboxes 321 and 322, whose function will be discussed in further detail below.

In accordance with the method of figure 2, the selected states may comprise whichever state or states are closest to the cursor 314, or pointer 315, or the last state in the current project, or indeed every state in the current project, window, view or the like, or any other suitable approach.
The selected states may comprise a StateMachine, a Hierarchical Parent State in the case of compound states such as described by David Harel in StateCharts: A visual Formalism for Complex Systems, Science of Computer Programming 8 (1987) 231-274I, or in the SCXML standard, or otherwise.
The method next proceeds for the state or states selected at step 210, to identify secondary states at step 215.
In various embodiments, secondary states may be:
- states of the finite state machine comprising transitions that lead to the selected state or states, or
- all the secondary states are states of the finite state machine comprising transitions that lead out of the selected state or states, or
- states belonging to a valid sequence through a series of selected states of the finite state machine, for example as defined by a user.

As shown in figure 3, the option pane 320 presents checkboxes 321 and 322. Checkbox 321 serves to receive a user input indicating that transitions entering the selected state or states are to be identified, and Checkbox 322 serves to receive a user input indicating that transitions leaving the selected state or states are to be identified. Other identification criteria as suggested herein or otherwise may be presented, either In addition to, or instead of those presented in figure 3. As such any combination of identification criteria may be used.

While for the sake of the present example the checkbox interface feature is presented, it will be appreciated that any suitable user input mechanism, whether in a graphical user interface, or otherwise, may be used.
As shown in figure 2, the identification of secondary states with regard to the selection criteria is represented as a succession of tests: in step 220 the method determines whether any states of the finite state machine comprise transitions that lead to the selected states, and in a case where any of the state or states do these states are identified as such at step 225 before proceeding to step 230. If no states meet the criterion of step 220, the method proceeds to step 230. At step 230 the method determines whether any states of the finite state machine comprise transitions that lead out of the selected state or states, and in a case where any of the state or states do, these states are identified as such at step 235 before proceeding to step 240. If no states meet the criterion of step 230, the method proceeds to step 240. At step 240 the method determines whether any user input has been received defining a valid sequence through a series of selected states of the finite state machine and in a case where any such input has been received these states are identified as such at step 245 before proceeding to step 250. If no states meet the criterion of step 240, the method proceeds to step 250. At step 250, a new representation of the text is prepared, with a textual representation integrating a textual representation of the selected state or states together with textual representations of each identified secondary state.
Depending on the selection criteria supported by particular implementations, the number of tests taken may be smaller or greater in number, and may comprise only a single test. Furthermore, while the tests are show in series, it will be appreciated that some or all of them may equally be processed in parallel.

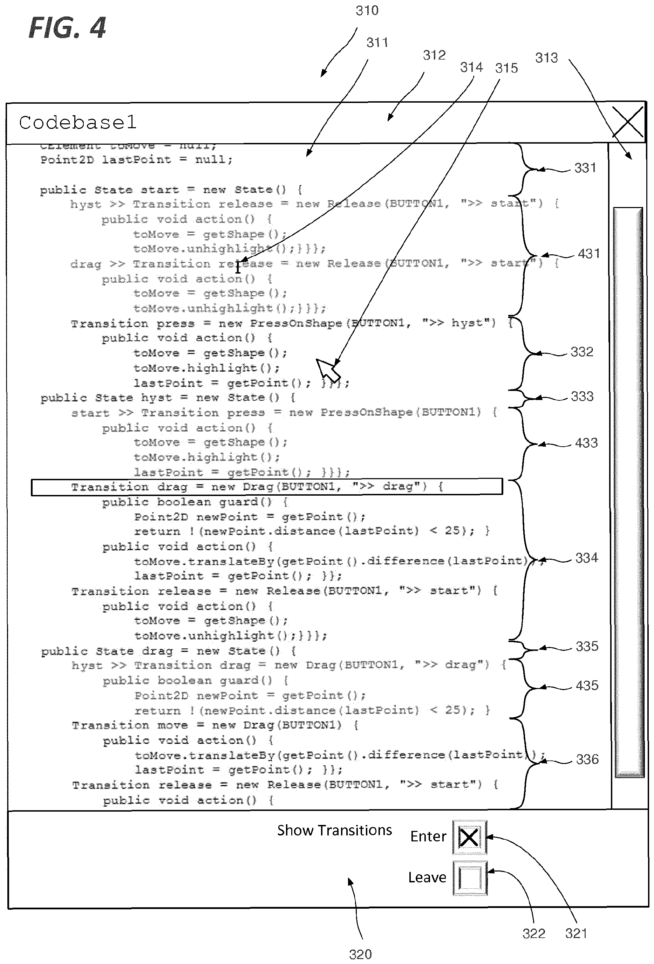

Figure 4 shows a representation of a software development environment in accordance with an embodiment. As shown in figure 4, there is provided a window 310 in a graphical user interface corresponding to that of figure 3. As shown, the checkbox 321 is checked, indicating that the user has requested that transitions entering the selected states be shown.
As discussed above, there are many possible approaches to defining the selected state or states. For the purposes of the example of figure 4 it is assumed that all States in the current project are selected for enhanced display.

Accordingly, the code 330 shown in figure 3 is shown in figure 4 as split into a series of sections 331, 332, 333, 334, 335, 336. Sections 331, 333, and 335 each correspond to the start of a State belonging to code 330 as described above. As shown, following the start of each State there is interspersed a further code section 431, 433, 435. These further code sections 431, 433, 435 correspond to the further states corresponding respectively to the states having transitions entering States 331, 333, 335. Thus specifically State 431 is a further state selected for enhanced display on the basis that it comprises a transition to State 331, State 432 is a further state selected for enhanced display on the basis that it comprises a transition to State 332, and State 433 is a further state selected for enhanced display on the basis that it comprises a transition to State 333. Accordingly, a user reviewing the code can rapidly see how execution reached its current position. As shown, the first line of code of State 334 is highlighted, indicating for the sake of example that code execution has been interrupted at this line of code. The user following the sequence of execution can conveniently see that the sequence of execution arrived at this point from State 433.

Accordingly the interactive code is initially represented with a textual representation of state machines: a machine contains states, which in turn contain transitions upon events that *leave* the state for the next one. The programmer/user can click on a check box to display transitions that *enter* one or more selected particular states. After clicking the checkbox, an animation may move the identified code corresponding to the 'leaving' transition to the bottom in order to make room for the code corresponding to the 'entering' transitions. As shown, the entering transitions then appear, displayed in grey and preceded with a ">> state" text. The entering transitions are copies of the leaving transitions that reside in other states.

The copies of the identified States may be linked: all changes made in the code of an entering transition may be reflected in the leaving transition and vice-versa. This may be implemented for example by means of a MVC mechanism (Model View Controller), where a Model of the code is provided in memory (for example in the form of strings of characters) and two Views (Representations) that are synchronized when the Model changes (usually because the user is modifying one of the views). This approach is known to programmers in interactive code as described for example by T. Reenskaug, in "Models - views - controllers." Xerox PARC, 1979.
According, a user input may be received specifying an amendment to a part of the textual representation. This may lead to the steps of identifying the amended state corresponding to the amendment, identifying the amended code corresponding to the amended state, and updating the amended code to reflect the amendment.

On the basis of these features, programmers are able to see the sequence of instructions in the context of a state by displaying the entering transitions. As a result, programmers are able to see the instructions of all transitions that led to the state. Hence, one can quickly check whether all transitions coming to the "start" state actually unhighlight the graphical shape. In addition, this also allows the programmer to rely on very short-term memory to compare related pieces of code and detect potential flaws. This makes programmers more efficient in understanding the code, at editing it according to a view suitable to their problems at hand, and corresponding shorter development times and more efficient, less error prone software. This in turn translates into energy savings, improved safety and lower system maintenance costs.

Figures 3 and 4 present an embodiment of the invention in the form of a particular Graphical User Interface implementation. It will be appreciated that there are countless possible such implementations, of which figures 3 and 4 are merely examples. Furthermore, it will be appreciated that embodiments may also adopt a text based approach, for example in which state selection and/or identification criteria are input via a command line.

While as described with reference to figure 4, the further state or states identified for display are one step removed from the selected states, it is possible to mine further into the execution flow by also identifying for display the states having transitions that lead into, or out of, the first level of identified states, and so on to any desired depth. Furthermore, the identified states may be identified on the basis of the actual flow of execution. This may be performed 'live' i.e. during execution, for example with the equivalent of a breakpoint on a state that pauses the execution, to avoid text appearing and disappearing everywhere very rapidly. For example, a debugging break point may be associated with a selected state such that when the code is executed and reaches that state, execution pauses and rather than selecting all secondary states feeding into, or out of, the selected states, only the states that did, in the current flow of execution lead to the selected state associated with the break point are displayed.

The disclosed methods can take form of an entirely hardware embodiment (e.g. FPGA), an entirely software embodiment (for example to control a system according to the invention) or an embodiment containing both hardware and software elements. As such, embodiments may comprise a number of subsystems, functional elements or means adapted to implement the invention in communication with each other, and/or with standard fixed function or programmable elements for example as described below.

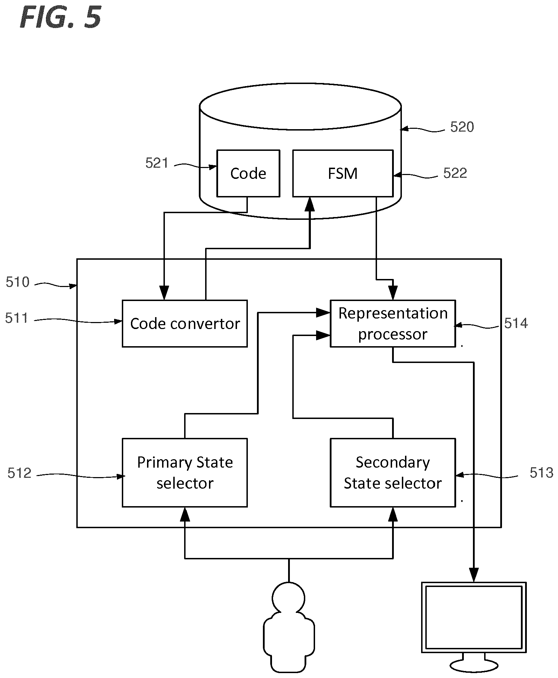

Figure 5 shows and apparatus in accordance with an embodiment. As shown in figure 5 there is provided an apparatus 510 for processing software code 521. As shown the software code 521 resides in a database 520. The apparatus 510 comprises a code converter 511 adapted to prepare a representation of the code 521 as a finite state machine 522. This Finite State Machine representation 522 is shown as residing in the database 520. The apparatus 510 further comprises a primary state selector 512 adapted to select one or more states of the finite state machine 522 for display and a secondary state selector 513 adapted to identify secondary states for the selected primary state, where
all the secondary states are states of the finite state machine comprising transitions that lead to the selected states, or
all the secondary states are states of the finite state machine comprising transitions that lead out of the selected states, or
the states belong to a valid sequence through a series of selected states of the finite state machine specified in user input received by the apparatus. The apparatus further comprises a representation processor 514 adapted to cause the presentation of a textual representation integrating a textual representation of the selected state or states as retrieved from the Finite State Machine representation 522 with a textual representation of the identified secondary states as retrieved from the Finite State Machine representation 522 .

Similarly, there is provided an apparatus adapted to perform the steps of any of the methods described above, for example with respect to figure 2, or any of the algorithms detailed above.

Accordingly, there is provided a mechanism for interacting with software code based on translation into a finite state machine is presented. The states of the translated code currently under review are presented, along with other related states. Related states may be states that feed into the states of the translated code currently under review, or that may follow those states in the process flow. User edits may be made to related states as they are presented in connection with states of the translated code currently under review, and the corresponding code updated accordingly. The states of the translated code currently under review, and the corresponding related states may be updated dynamically to reflect actual code execution.

Software embodiments include but are not limited to applications, firmware, resident software, microcode, etc. The invention can take the form of a computer program product accessible from a computer-usable or computer-readable medium providing program code for use by or in connection with a computer or an instruction execution system, or for implementation in dedicated or suitably programmable hardware, as a Finite State Machine or otherwise.
A computer-usable or computer-readable can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium.
In some embodiments, the methods and processes described herein may be implemented in whole or part by a user device. These methods and processes may be implemented by computer-application programs or services, an application-programming interface (API), a library, and/or other computer-program product, or any combination of such entities.
The user device may be a mobile device such as a smart phone or tablet, a drone, a computer or any other device with processing capability, such as a robot or other connected device, including loT (Internet Of Things) devices.

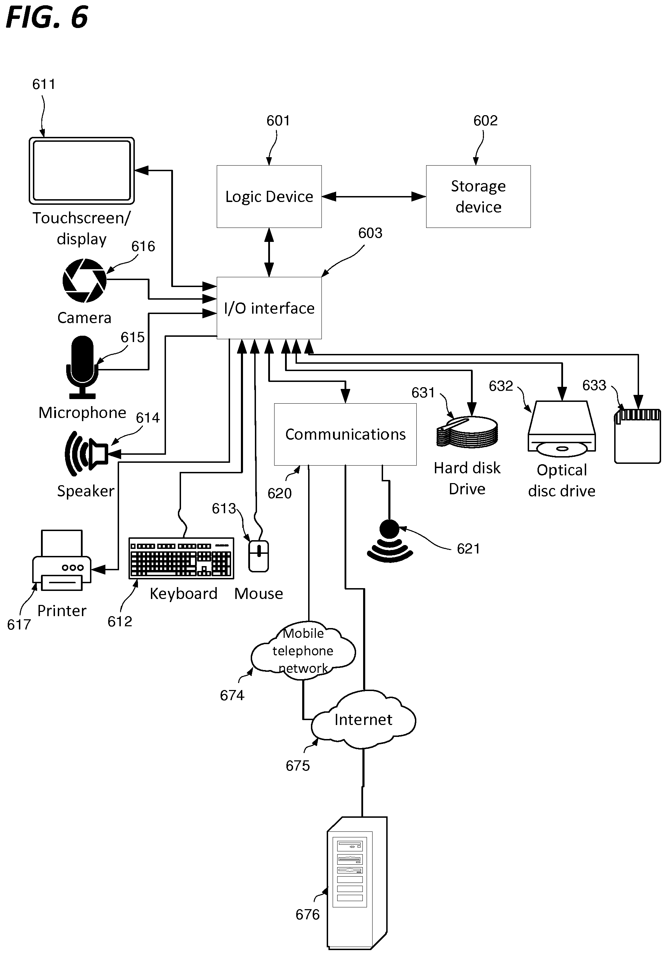

Figure 6 shows a generic computing system suitable for implementation of embodiments of the invention.
A shown in figure 6, a system includes a logic device 601 and a storage device 602. The system may optionally include a display subsystem 611, input/output subsystem 603, communication subsystem 620, and/or other components not shown.
Logic device 601 includes one or more physical devices configured to execute instructions. For example, the logic device 601 may be configured to execute instructions that are part of one or more applications, services, programs, routines, libraries, objects, components, data structures, or other logical constructs. Such instructions may be implemented to perform a task, implement a data type, transform the state of one or more components, achieve a technical effect, or otherwise arrive at a desired result.
The logic device 601 may include one or more processors configured to execute software instructions. Additionally or alternatively, the logic device may include one or more hardware or firmware logic devices configured to execute hardware or firmware instructions. Processors of the logic device may be single-core or multi-core, and the instructions executed thereon may be configured for sequential, parallel, and/or distributed processing. Individual components of the logic device 601 optionally may be distributed among two or more separate devices, which may be remotely located and/or configured for coordinated processing. Aspects of the logic device 601 may be virtualized and executed by remotely accessible, networked computing devices configured in a cloud-computing configuration.
Storage device 602 includes one or more physical devices configured to hold instructions executable by the logic device to implement the methods and processes described herein. When such methods and processes are implemented, the state of storage 602 device may be transformed-e.g., to hold different data.
Storage device 602 may include removable and/or built-in devices. Storage device may be locally or remotely stored (in a cloud for instance). Storage device 602 may comprise one or more types of storage device including optical memory (e.g., CD, DVD, HD-DVD, Blu-Ray Disc, etc.), semiconductor memory (e.g., FLASH, RAM, EPROM, EEPROM, etc.), and/or magnetic memory (e.g., hard-disk drive, floppy-disk drive, tape drive, MRAM, etc.), among others. Storage device may include volatile, non-volatile, dynamic, static, read/write, read-only, random-access, sequential-access, location-addressable, file-addressable, and/or content-addressable devices. In certain arrangements, the system may comprise an interface 603 adapted to support communications between the Logic device 601 and further system components. For example, additional system components may comprise removable and/or built-in extended storage devices. Extended storage devices may comprise one or more types of storage device including optical memory 632 (e.g., CD, DVD, HD-DVD, Blu-Ray Disc, etc.), semiconductor memory (not shown) (e.g., RAM, EPROM, EEPROM, FLASH etc.), and/or magnetic memory 631 (e.g., hard-disk drive, floppy-disk drive, tape drive, MRAM, etc.), among others. Such extended storage device may include volatile, non-volatile, dynamic, static, read/write, read-only, random-access, sequential-access, location-addressable, file-addressable, and/or content-addressable devices.
It will be appreciated that storage device includes one or more physical devices, and excludes propagating signals per se. However, aspects of the instructions described herein alternatively may be propagated by a communication medium (e.g., an electromagnetic signal, an optical signal, etc.), as opposed to being stored on a storage device.
Aspects of logic device 601 and storage device 602 may be integrated together into one or more hardware-logic components. Such hardware-logic components may include field-programmable gate arrays (FPGAs), program- and application-specific integrated circuits (PASIC/ASICs), program- and application-specific standard products (PSSP/ASSPs), system-on-aα-chip (SOC), and complex programmable logic devices (CPLDs), for example.
The term "program" may be used to describe an aspect of computing system implemented to perform a particular function. In some cases, a program may be instantiated via logic device executing machine-readable instructions held by storage device 602. It will be understood that different modules may be instantiated from the same application, service, code block, object, library, routine, API, function, etc. Likewise, the same program may be instantiated by different applications, services, code blocks, objects, routines, APIs, functions, etc. The term "program" may encompass individual or groups of executable files, data files, libraries, drivers, scripts, database records, etc.
In particular, the system of figure 6 may be used to implement embodiments of the invention.
For example a program implementing the steps described with respect to figure 2, or the algorithms presented above may be stored in storage device 602 and executed by logic device 501. The functions of any or all of the of the units 511, 512, 513 or 514 may similarly be implemented by a program performing the required functions, in communication with additional dedicated hardware units as necessary, and the Code 521 and/or Finite State Machine 522 may be stored in storage device 602. Accordingly the invention may be embodied in the form of a computer program.
It will be appreciated that a "service", as used herein, is an application program executable across multiple user sessions. A service may be available to one or more system components, programs, and/or other services. In some implementations, a service may run on one or more server-computing devices.
When included, display subsystem 611 may be used to present a visual representation of data held by a storage device. This visual representation may take the form of a graphical user interface (GUI). As the herein described methods and processes change the data held by the storage device 602, and thus transform the state of the storage device 602, the state of display subsystem 611 may likewise be transformed to visually represent changes in the underlying data. Display subsystem 611 may include one or more display devices utilizing virtually any type of technology for example as discussed above. Such display devices may be combined with logic device and/or storage device in a shared enclosure, or such display devices may be peripheral display devices.
When included, input subsystem may comprise or interface with one or more user-input devices such as a keyboard 612, mouse 613, touch screen 611, or game controller (not shown). In some embodiments, the input subsystem may comprise or interface with selected natural user input (NUI) componentry. Such componentry may be integrated or peripheral, and the transduction and/or processing of input actions may be handled on- or off-board. Example NUI componentry may include a microphone for speech and/or voice recognition; an infrared, colour, stereoscopic, and/or depth camera for machine vision and/or gesture recognition; a head tracker, eye tracker, accelerometer, and/or gyroscope for motion detection and/or intent recognition; as well as electric-field sensing componentry for assessing brain activity. When included, communication subsystem 620 may be configured to communicatively couple computing system with one or more other computing devices. For example, communication module of communicatively couple computing device to remote service hosted for example on a remote server 676 via a network of any size including for example a personal area network, local area network, wide area network, or internet. Communication subsystem may include wired and/or wireless communication devices compatible with one or more different communication protocols. As non-limiting examples, the communication subsystem may be configured for communication via a wireless telephone network 674, or a wired or wireless local- or wide-area network. In some embodiments, the communication subsystem may allow computing system to send and/or receive messages to and/or from other devices via a network such as Internet 675. The communications subsystem may additionally support short range inductive communications with passive or active devices (NFC, RFID, UHF, etc).
The system of figure 6 is intended to reflect a broad range of different types of information handling system. It will be appreciated that many of the subsystems and features described with respect to figure 6 are not required for implementation of the invention, but are included to reflect possible systems in accordance with the present invention. It will be appreciated that system architectures vary widely, and the relationship between the different sub-systems of figure 6 is merely schematic, and is likely to vary in terms of layout and the distribution of roles in systems. It will be appreciated that, in practice, systems are likely to incorporate different subsets of the various features and subsystems described with respect to figure 6.
It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. An apparatus for processing software code, said apparatus comprising a code converter adapted to prepare a representation of said code as a finite state machine;
a primary state selector adapted to select one or more states of said finite state machine for display,
a secondary state selector adapted to identify secondary states for said selected primary states, where
all said secondary states are states of said finite state machine comprising transitions that lead to said selected states, or
all said secondary states are states of said finite state machine comprising transitions that lead out of said selected states, or
the states belong to a valid sequence through a series of selected states of said finite state machine specified in user input received by said apparatus; and
a representation processor adapted to cause the presentation of a textual representation integrating a textual representation of said selected states with a textual representation of said secondary states.

2. The apparatus of claim 1, said apparatus being further adapted to receive a user input specifying whether said secondary states should comprise all states of said finite state machine comprising transitions that lead to said selected states, or otherwise all states of said finite state machine comprising transitions that lead out of said selected states; and to refresh said textual representation accordingly.

3. The apparatus of claim 1 or 2, said apparatus being further adapted to receiving a user input specifying which state of said finite state machine is to constitute said selected states.

4. The apparatus of any preceding claim, said apparatus being adapted to receive a user input specifying an amendment to a part of said textual representation,
to identify the amended state corresponding to said amendment,
to identify the amended code corresponding to said amended state, and
to update said amended code to reflect said amendment.

5. The apparatus of any preceding claim, said apparatus being adapted to select one or more said secondary states as expanded secondary states, whereby further states of said finite state machine are selected for display as secondary states in the case where they are states of said finite state machine comprising transitions that lead to said expanded secondary states, or are states of said finite state machine comprising transitions that lead out of said expanded secondary states.

6. The apparatus of any preceding claim, said apparatus being adapted to select one or more states of said finite state machine for display where said selected states lie within a current flow of execution.

7. A method of processing software code, said method comprising the steps of:
preparing a representation of said code as a finite state machine;
selecting one or more states of said finite state machine for display;
for each of said selected states, identifying secondary states, where
all said secondary states are states of said finite state machine comprising transitions that lead to said selected states, or
all said secondary states are states of said finite state machine comprising transitions that lead out of said selected states,
or receiving user input specifying a valid sequence through a series of selected states of said finite state machine; and
presenting a textual representation integrating a textual representation of said selected states with a textual representation of said secondary states.

8. The method of claim 7 comprising the additional steps of receiving a user input specifying whether said secondary states should comprise all states of said finite state machine comprising transitions that lead to said selected states, or otherwise all states of said finite state machine comprising transitions that lead out of said selected states; and refreshing said textual representation accordingly.

9. The method of any of claims 7 to 8 comprising the additional step of receiving a user input specifying which state of said finite state machine is to constitute said selected states.

10. The method of any of claims 7 to 9 comprising the additional step of receiving a user input specifying an amendment to a part of said textual representation,
Identifying the amended state corresponding to said amendment,
Identifying the amended code corresponding to said amended state, and
updating said amended code to reflect said amendment.

11. The method of any of claims 7 to 10 comprising the further steps of selecting one or more said secondary states as expanded secondary states, whereby further states of said finite state machine are selected for display as secondary states in the case where they are states of said finite state machine comprising transitions that lead to said expanded secondary states, or are states of said finite state machine comprising transitions that lead out of said expanded secondary states.

12. The method of any of claims 7 to 11 wherein said step of selecting one or more states of said finite state machine for display comprises selecting states that lie within a current flow of execution.

13. A computer program adapted to implement the steps of any of claims 7 to 12.

14. A computer readable medium incorporating the computer program of claim 13.
